Europäisches Patentamt

European Patent Office

Office européen des brevets

(11) Publication number: **0 189 115 B1**

# EUROPEAN PATENT SPECIFICATION

(45) Date of publication of patent specification: **06.11.91**  (51) Int. Cl.⁵: **G05B 19/403**

(21) Application number: **86100488.5**

(22) Date of filing: **16.01.86**

(54) **Numerical control device.**

(30) Priority: **21.01.85 JP 7384/85**

(43) Date of publication of application:
**30.07.86 Bulletin 86/31**

(45) Publication of the grant of the patent:
**06.11.91 Bulletin 91/45**

(84) Designated Contracting States:
**DE FR GB**

(56) References cited:
**EP-A- 0 060 893**
**EP-A- 0 163 947**
**FR-A- 2 186 689**
**US-A- 4 423 484**

**PATENT ABSTRACTS OF JAPAN, vol. 9, no. 62 (P-342)[1785], 19th March 1985; & JP-A-59 195 706 (YAMATAKE HONEYWELL K.K.) 06-11-1984**

(73) Proprietor: **MITSUBISHI DENKI KABUSHIKI KAISHA**
**2-3, Marunouchi 2-chome Chiyoda-ku Tokyo 100(JP)**

(72) Inventor: **Ichikawa, Katsuya MITSUBISHI DE-NKI**
**MECHATRONICS SOFTWARE K.K. 1-14, Yada Minami 5 ch.**
**Higashi-ku Nagoya-shi Aichi(JP)**
Inventor: **Yoshida, Toshio MITSUBISHI DENKI K. K.**
**Nagoya Works 1-14, Yada Minami 5 ch.**
**Higashi-ku Nagoya-shi Aichi(JP)**

(74) Representative: **Eisenführ, Speiser & Strasse**
**Martinistrasse 24**
**W-2800 Bremen 1(DE)**

Rank Xerox (UK) Business Services

## Description

### BACKGROUND OF THE INVENTION

#### Field of the Invention

The present invention relates to a numerical control device in an automatic programmed or numerically controlled machine tool.

#### Description of the Prior Art

A conventional numerical control device, hereinafter referred to as an "NC device", is shown in Fig. 3, wherein a CPU 1 is connected with a memory 2, which includes a random access memory (RAM) and read only memory (ROM), and a tape reader 15. The memory 2 has a battery 16 which supplies the same, when a main power is turned off, with necessary power for retaining contents of data stored in the RAM. A tool 17 which performs desired machining work is controlled by a numerical control signal coming from the CPU.

The operation of the numerical control for performing the desired machining work is of the tool begun with reading of the relevant working program data recorded in a paper tape by the tape reader 15. The data thus read out is written, as a first step, into the RAM of the memory 2 under the control of the CPU. Then, the CPU reads, according to a control program stored in the ROM of the memory 2 in advance, the data written in the RAM piece by piece to supply the same to the tool 17 for the desired machining work. The data once written in the RAM is retained, even after the main power switch of the device has been turned off, by means of the power of the backup battery 16.

It was a problem in such a prior art NC device that the battery had to be exchanged for a new one in rather a short period of time since the energy of the backup battery 16 is continued to be consumed while the main power switch is held off. Another problem in the prior art was that the program was difficult to be changed since the control program was stored in the ROM.

Accordingly, the present invention is directed to the provision of an approach to solve the above two important problems encountered in the prior art NC device.

### SUMMARY OF THE INVENTION

The NC device of the present invention comprises a CPU, an initial program loader having an exchangeable storage medium which stores a predetermined starting program and connected with the CPU, a RAM connected with the CPU, a non-volatile storage device which stores a predetermined control program and working program and is connected with the CPU, and a power unit connected with the storage device through a power switch, wherein the initial program loader is provided, in response to closing of a main power switch of the NC device and in accordance with the starting program, for (a) turning on the power switch to render the storage device operable; (b) reading the control program and the working program stored in the storage device and writing the same into the RAM at a predetermined address; (c) in succession to completion of the write operation of the program into the RAM, turning the power switch off to render the storage device inoperable; and (d) causing the control program stored in the RAM to be started.

When the main power switch of the NC device is turned off, the control program and working program stored in the RAM are lost, but if the main power switch is turned on for operation of the device for the next operation, the control program and working program are automatically transferred from the storage device to the RAM. Thus, the need for provision of a battery to retain the RAM in an operable state after the main power switch has been turned off can be eliminated.

An appropriate storage device for use in the invention is a floppy disk device. The floppy disk device is required to operate only while the control program and working program are being transferred to the RAM and it is cut off from the power unit in other period of time than that.

### BRIEF DESCRIPTION OF THE DRAWINGS

Fig. 1 is a block diagram showing an NC device of the invention;
Fig. 2 is a flow chart showing operations of the initial program loader in the device of Fig. 1; and
Fig. 3 is a block diagram showing an NC device of the prior art.

### DETAILED DESCRIPTION OF THE PREFERRED EMBODIMENTS

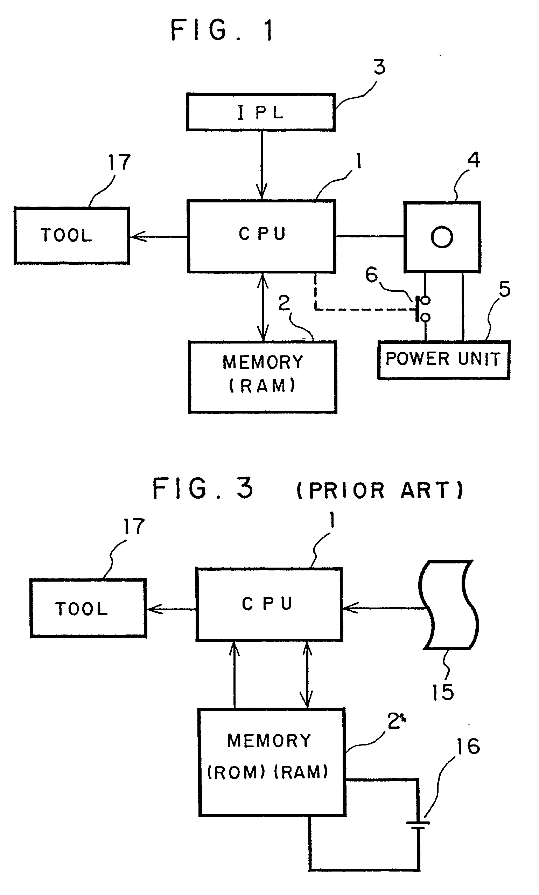

Referring to Fig. 1 which shows an NC device of the invention, a CPU 1 is connected with a RAM 2, an initial program loader 3, a storage device 4 having an easily exchangeable and nonvolatile memory such as a floppy disk, and a tool 17. The initial program loader, hereinafter referred to as an "IPL", is provided, in response to a closing operation of a main power switch (not shown) of the NC device, to control operations of the CPU in accordance with a predetermined starting program, of which detailed description will be given later.

The storage device 4 is connected through a power switch 6 to a power unit 5. When the power switch 6 is turned on by a command from the CPU, a control program and a working program stored in the nonvolatile memory are read out under the control of the CPU and then written into the RAM 2. Although an example of the appropriate nonvolatile memory is a floppy disk, it may be constituted of any other nonvolatile memory elements such as a bubble memory, a hard disk, and so on. Upon completion of transfer of the control program and working program from the storage device 4 to the RAM 2, the power switch 6 is turned off by a command from the CPU and the control program is started. The operation up to this point are specified by the starting program stored in the IPL 3.

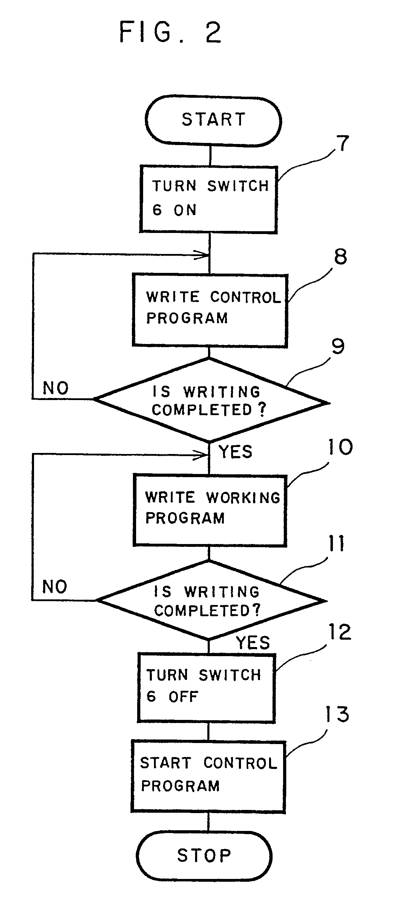

A flow chart of the processing operations performed according to the starting program is shown in Fig. 2. The start is effected by the closing of the main power switch of the NC device. The first processing step is the step 7 to turn on the power switch 6 provided between the storage device 4 and the power unit 5. Upon turning on of the power switch 6, the storage device 4 is rendered operable, the control program is first read from the nonvolatile memory of, for example, a floppy disk by a command from the CPU to the storage device 4 in accordance with the starting program, and this control program is written, through the CPU, into the RAM 2 at a predetermined address (step 8). Succeeding to confirmation in the step 9 of completion of the write operation of the control program, the working program data is read out from the storage device 4 and written in the RAM 2 at a predetermined address in the step 10 in the same manner as in the case of the control program. Completion of the write operation of the control program into the RAM is confirmed in the step 11. After the completion of the write operation of the working program, the power switch 6 is turned off (step 12), and in succession thereto the control program transferred to the RAM 2 is made to start in the step 13.

Steps 8 and 10 are interchangeable to each other. Thus, step 7 may be followed by steps 10 and 11, and then steps 8 and 9 may be executed. In this case, the working data is written in the RAM 2, in advance to the writing of the control program in the RAM 2.

The operation to be performed after the control program has been started are the same as in the case of the prior art device as shown in Fig. 3, that is, the tool 17 is controlled according to the working program stored in the RAM to perform the desired working.

The above-described operation is repeated each time the main power switch of the NC device is turned on. Namely, although the data about the control program and working program stored in the RAM 2 are all lost upon turning off of the main power switch, following the turning on of the same the next time, the RAM 2 is again stored, by execution of the starting program, with the control program and working program the same as those present before the turning off of the main power switch. This eliminates the need for use of a backup battery for the RAM 2 and the previously described defect in the prior art due to the use of the battery is overcome.

Furthermore, extension and modification of the system can be readily achieved by exchanging the storage medium in the IPL 3 storing the starting program of a pattern for that storing another pattern.

## Claims

1. A numerical control device for a numerically controlled machine tool comprising:

   a CPU (1);
   an initial program loader (3) having an exchangeable storage medium which stores a predetermined starting program and is connected with said CPU (1); a RAM (2) connected with said CPU (1);
   a non-volatile storage device (4) such as a floppy disk device, hard disk device or the like which stores a predetermined control program and working program and is connected with said CPU (1);
   and a power unit (5) connected with said storage device (4) through a power switch (6);
   wherein said initial program loader (3) is provided, in response to closing of a main power switch of said NC device and in accordance with the starting program for
   (a) turning on said power switch (6) to render said storage device (4) operable;
   (b) reading the control program and the working program stored in said storage device (4) and writing the same into said RAM (2) at a predetermined address;
   (c) in succession to completion of the write operation of the programs into said RAM (2), turning the power switch (6) off to render said storage device (4) inoperable; and
   (d) causing the control program stored in the RAM (2) to be started.

## Revendications

1. Dispositif à commande numérique pour une machine outil numériquement commandée comprenant :
   une unité centrale (1) ;
   un chargeur de programme initial (3) comportant un support de mémoire échangeable qui mémorise un programme de lancement prédéterminé et qui est relie à ladite unité centrale (1) ;

une mémoire vive (2) reliée à ladite unité centrale (1) ;

un dispositif de mémoire rémanente (4) tel qu'une unité de disque souple, une unité de disque dur ou analogues qui mémorise un programme de commande et un programme d'usinage prédéterminés et qui est reliée à ladite unité centrale (1) ;

et une alimentation (5) reliée audit dispositif de mémoire (4) par l'intermédiaire d'un interrupteur d'alimentation (6) ;

dans lequel ledit chargeur de programme initial (3) est prévu, en réponse à la fermeture de l'interrupteur d'alimentation secteur dudit dispositif à commande numérique et en conformité avec le programme de lancement pour

(a) fermer l'interrupteur d'alimentation (6) afin de rendre ledit dispositif de mémoire (4) opérationnel;

(b) lire le programme de commande et le programme d'usinage mémorisés dans ledit dispositif de mémoire (4) et les écrire dans ladite mémoire vive (2) à une adresse prédéterminée ;

(c) ensuite, à l'achèvement de l'opération d'écriture des programmes dans ladite mémoire vive (2), ouvrir l'interrupteur d'alimentation (6) pour rendre ledit dispositif de mémoire (4) non opérationnel ; et

(d) amener le programme de commande mémorisé dans la mémoire vive (2) à être lancé.

**Patentansprüche**

1. Numerische Steuerung für eine numerisch gesteuerte Werkzeugmaschine mit einer CPU (1); mit einem Urlader (3), der ein austauschbares Speichermedium enthält, welches ein vorbestimmtes Startprogramm speichert und mit der CPU (1) verbunden ist; mit einem an die CPU (1) angeschlossenen RAM (2); mit einer nichtflüchtigen Speichervorrichtung (4) wie z.B. einem Disketten-Laufwerk, einer Festplatte o.ä., welche ein vorbestimmtes Steuerprogramm und Arbeitsprogramm speichert und mit der CPU (1) verbunden ist; und mit einer Energiequelle (5), welche über einen Schalter (6) mit der Speichervorrichtung (4) verbunden ist, dadurch gekennzeichnet, daß der Urlader (3) so ausgebildet ist, daß er als Reaktion auf das Schließen eines Hauptschalters der NC-Maschine und dem Startprogramm entsprechend

(a) den Schalter (6) einschaltet, um die Speichervorrichtung (4) in Betrieb zu nehmen;

(b) das in der Speichervorrichtung (4) gespeicherte Steuerprogramm und das Arbeitsprogramm liest und beide in das RAM (2) an eine vorbestimmte Adresse schreibt;

(c) nach erfolgreicher Beendigung des Schreibens der Programme in das RAM (2) den Schalter (6) abschaltet, um die Speichervorrichtung (4) außer Betrieb zu nehmen, und

(d) ein Starten des in dem RAM (2) gespeicherten Steuerprogrammes bewirkt.

# FIG. 1

```
          3
     ┌─────────┐
     │   IPL   │
     └─────────┘
          │
          ▼
17        1              4
┌──────┐  ┌──────────┐   ┌──────┐
│ TOOL │◄─│   CPU    │───│  ○   │
└──────┘  └──────────┘   └──────┘
             │  │  6        │
             │  └ ─ ─┤├     │
             ▼      2       ▼    5
          ┌──────────┐   ┌──────────────┐
          │  MEMORY  │   │  POWER UNIT  │
          │  (RAM)   │   └──────────────┘
          └──────────┘
```

# FIG. 3    (PRIOR ART)

```
17            1
┌──────┐  ┌──────────┐     ╭──╮
│ TOOL │◄─│   CPU    │◄────│  │
└──────┘  └──────────┘     │  │
           ▲      ▲        ╰──╯
           │      │         15
           │      │
           ▼      ▼
          ┌──────────────┐
          │    MEMORY    │  2
          │ (ROM) (RAM)  │
          └──────────────┘
                  │        16
                  │       ─┴─
                  └────────┤├
```

# FIG. 2

START

TURN SWITCH
6 ON · 7

WRITE CONTROL
PROGRAM · 8

IS WRITING
COMPLETED ? · 9
NO
YES

WRITE WORKING
PROGRAM · 10

IS WRITING
COMPLETED? · 11
NO
YES

TURN SWITCH
6 OFF · 12

START CONTROL
PROGRAM · 13

STOP